# FASCICULE DE BREVET EUROPEEN

(11) **EP 3 087 720 B1**
(45) Date de publication et mention de la délivrance du brevet: **19.02.2020**
(21) Numéro de dépôt: 14828240.3
(22) Date de dépôt: 18.12.2014
(51) Int. Cl.: H04L 29/06, H04L 29/08

(54) **TECHNIQUE DE CONTRÔLE DU ROUTAGE D'UNE REQUÊTE RELATIVE A UN SERVICE**
TECHNIQUE FOR CONTROLLING THE ROUTING OF A REQUEST RELATING TO A SERVICE
TECHNIK ZUR STEUERUNG DES ROUTINGS EINER SERVICE-BEZOGENEN ANFRAGE

(30) Priorité: 23.12.2013 FR 1363473
(43) Date de publication de la demande: 02.11.2016
(73) Titulaire: Orange, 75015 Paris (FR)
(72) Inventeur: STEPHAN, Emile, F-22560 Pleumeur Bodou (FR)
(86) Numéro de dépôt international: PCT/FR2014/053409
(87) Numéro de publication internationale: WO 2015/097369

(56) Documents cités:
- US-A1- 2009 031 032
- US-A1- 2013 117 413
- US-B1- 6 532 493
- "[ScreenOS] Configuration Example on how to redirect Web traffic to a Proxy Server using PBR (Policy-Based Routing)", , 1 janvier 2012 (2012-01-01), pages 1-2, XP055139776, Extrait de l'Internet: URL:http://kb.juniper.net/InfoCenter/index ?page=content&id=KB24139&actp=RSS [extrait le 2014-09-11]

## Description

L'invention se situe dans le domaine des réseaux de communication par paquets et concerne plus particulièrement une technique de contrôle du routage d'une requête de service.

Il est fréquent pour un opérateur d'un réseau de communication d'utiliser dans son réseau des serveurs mandataires ou « proxy » en anglais, afin de proposer à ses abonnés des services à valeur ajoutée fournis par l'opérateur lui-même ou par un partenaire de l'opérateur. Ces serveurs mandataires permettent d'analyser et d'enrichir une requête relative à un service émise par une application cliente dite « user-agent » (e.g. un navigateur) installée sur un terminal utilisateur, ou encore depuis un équipement permettant de se connecter à l'Internet. L'analyse de la requête est par exemple réalisée à l'aide d'une technique dite d'Inspection des Paquets en Profondeur (ou DPI en anglais pour «Deep Packet Inspection ») et son enrichissement par l'ajout d'un ou plusieurs paramètres HTTP pour « HyperText Transfer Protocol ». Grâce à cette requête enrichie, un fournisseur de services peut par exemple fournir des fonctions telles qu'un contrôle parental, des services géolocalisés, ou encore une personnalisation du service délivré en fonction d'un type d'abonnement de l'abonné. Les serveurs mandataires sont en outre généralement localisés à l'interface de plusieurs réseaux de communication. Ils permettent en particulier de différencier le trafic à destination de l'opérateur, d'un partenaire de l'opérateur, ou encore d'un réseau tiers.

La prochaine version du protocole HTTP, le « HTTP 2.0 », actuellement en cours de discussion au sein du groupe de travail « Hypertext Transfer Protocol Bis » (ou httpbis) de l'IETF pour « Internet Engineering Task Force », met en œuvre des fonctions qui complexifient l'analyse et l'enrichissement des requêtes relatives à un service émises depuis par exemple un navigateur. Le protocole HTTP 2.0 permet en particulier un multiplexage des échanges, un entrelacement de ces échanges, une compression des entêtes qui leurs sont relatifs, et également de les sécuriser à l'aide du protocole TLS pour « Transport Layer Security ». Ces nouvelles fonctions nécessitent un traitement adapté par l'opérateur de réseau afin d'assurer une continuité des services à valeurs ajoutés proposés à ses abonnés. Pour cela l'opérateur de réseau associe un serveur mandataire à un ou plusieurs services proposés par l'opérateur ou un fournisseur de services vers lesquels router les requêtes relatives à l'un de ces services. Cette association n'est cependant pas toujours respectée. Le routage de ces requêtes vers le serveur mandataire associé à un service peut en effet ne pas être pris en compte, ou les requêtes pour ce service être redirigées par un navigateur, ou encore re-routées par un équipement réseau. Cela peut en particulier occasionner un routage vers un serveur mandataire inadapté au traitement du service requis. L'absence d'analyse et/ou d'enrichissement de la requête relative au service requis par un serveur mandataire en charge du contrôle des requêtes pour le service, peut notamment se traduire par des problèmes de facturation liée au service (e.g. facturation d'un service gratuit), une dégradation du service requis ou souscrit par un abonné, ou encore une impossibilité pour l'opérateur ou le fournisseur de services de le délivrer.

Le document D2 (US 2009/031032 A1) décrit une méthode permettant à un premier proxy de bordure de faire suivre une requête pour un service vers un deuxième proxy de bordure.

Le document D4 (US 2013/0117413 A1) décrit une méthode et un dispositif permettant à un serveur de distribution de contenus de transmettre un contenu à un équipement relais ayant transmis une requête d'obtention du contenu en vue de le distribuer à un autre dispositif ou bien d'informer un dispositif ayant transmis la requête de solliciter un équipement relais pour obtenir le contenu.

Un des buts de l'invention est de remédier à des insuffisances/inconvénients de l'état de la technique et/ou d'y apporter des améliorations.

Selon un premier aspect l'invention concerne un procédé de contrôle du routage d'une requête relative à un service, le procédé comprenant les étapes suivantes mises en œuvre par un serveur fournissant le service :
- réception de la requête relative à un service ;
- vérification que la requête a été reçue d'un serveur mandataire en charge du contrôle des requêtes pour le service ;
et lorsque la requête n'a pas été reçue d'un serveur mandataire en charge du contrôle des requêtes pour le service:
- transmission de la requête relative à un service vers au moins un serveur mandataire en charge du contrôle des requêtes pour le service.

Le procédé permet de garantir à un fournisseur de services dans une relation de confiance avec un tiers, une supervision et/ou un traitement des requêtes qui lui sont destinées. La supervision et/ou le traitement des requêtes sont par exemple définis contractuellement entre le fournisseur de services et ce tiers auquel ces opérations sont déléguées. Cette relation de confiance se matérialise notamment par l'utilisation d'un serveur mandataire en charge du contrôle des requêtes pour le service requis lors de leur routage. Il est souligné que ce serveur mandataire en charge du contrôle des requêtes pour le service est par exemple contrôlé par le tiers, ce qui signifie notamment que le serveur mandataire est géré par le tiers ou encore qu'il a été agréé par ce tiers. Ce tiers de confiance peut en particulier être un opérateur de réseau de communication.

Le procédé permet plus particulièrement de réorienter une requête vers un équipement du réseau agréé par un tiers de confiance, lorsque la requête n'a pas été reçue d'un tel équipement par le fournisseur de services. Des mesures permettant d'assurer la continuité des services délégués par le fournisseur de services au serveur mandataire contrôlé par le tiers peuvent être prises. Le procédé permet ainsi au tiers d'enrichir les requêtes envoyées au fournisseur de services (e.g. enrichissement avec une information relative à une localisation du terminal utilisateur, avec une information relative à un type d'abonnement), de les filtrer (e.g. contrôle parentale, restriction d'accès pour un type d'abonnement), de les analyser (e.g. production de statistiques relatives à un trafic observé), ou encore de les convertir dans un format approprié pour le fournisseur de services (e.g. conversion d'une requête émise conformément au protocole HTTP 2.0 en une requête conforme au protocole HTTP 1, chiffrement de la requête). Il permet également à l'opérateur du réseau de communication de réaliser des calculs de facturation relatifs au trafic à destination du fournisseur de services. Le procédé permet en outre d'éviter à un abonné de l'opérateur du réseau de communication une expérience utilisateur dégradée due à une fourniture partielle d'un service ou à l'incapacité du fournisseur de services de délivrer un service.

En outre, le procédé permet de prémunir le fournisseur de services d'un problème de sécurité lié à un routage de la requête vers un équipement du réseau susceptible de malveillance sur le contenu de la requête ou envers le fournisseur de services. Il permet en particulier d'assurer au fournisseur de services que la requête lui est parvenue par l'intermédiaire d'un tiers de confiance, et donc de garantir un parcours sécurisé de cette dernière.

Le procédé permet également de corriger une erreur de routage de la requête émise par un navigateur. Il permet notamment d'informer le tiers d'une absence de prise en compte par un navigateur lors du routage de la requête, d'un serveur mandataire recommandé par le tiers.

Selon une caractéristique particulière la requête est reçue en provenance d'un serveur mandataire, la vérification comprenant la recherche de l'appartenance du serveur mandataire à une liste d'au moins un serveur mandataire en charge du contrôle des requêtes pour le service.

La vérification que le serveur mandataire duquel est reçue la requête est bien un serveur mandataire en charge du contrôle des requêtes pour le service, permet au fournisseur de services de s'assurer que cette requête n'a pas été interceptée par un serveur mandataire non agréé par un tiers de confiance. Des problèmes de sécurité et de confidentialité des informations utilisateurs sont ainsi évités.

Selon une caractéristique particulière le procédé comprend l'obtention de la liste auprès d'un serveur de résolution, en particulier un serveur de résolution de nom de domaine, un serveur d'optimisation de trafic applicatif ou un serveur d'établissement de communications conversationnelles.

L'interrogation d'un serveur de résolution, en particulier d'un serveur de résolution de nom de domaine permet au fournisseur de services d'obtenir une liste de serveurs mandataires en charge du contrôle des requêtes pour le service associée à un nom de domaine de ce fournisseur. Elle permet en particulier de ne pas solliciter un tiers en charge de la gestion de ces serveurs mandataires à chaque requête reçue lors de l'étape de vérification, ce qui facilite par ailleurs le déploiement du procédé dans une infrastructure réseau du fournisseur de services.

Selon une caractéristique particulière le procédé comprend la recherche, dans la liste, d'une information identifiant un serveur mandataire en connexion avec l'équipement ayant émis la requête, l'étape de transmission consistant à envoyer la requête vers le serveur mandataire identifié.

La liste de serveur obtenue du serveur de résolution peut contenir une information identifiant un serveur mandataire en connexion avec l'équipement ayant émis la requête. Lorsqu'un tel serveur est identifié, la requête peut avantageusement être envoyée à destination de ce serveur. Dans le cas par exemple d'une connexion déjà établie selon le protocole HTTP2/TLS, le traitement de la requête peut directement être pris en charge par le serveur mandataire identifié. La négociation d'une nouvelle session TLS étant évitée, le traitement de la requête est également accéléré. En outre, à la différence d'une redirection de la requête vers le serveur mandataire identifié, la requête ne transite pas de nouveau par le serveur mandataire par lequel elle a initialement été reçue. Une interception potentielle de la requête par ce dernier est ainsi évitée.

Selon une caractéristique particulière la liste est fournie au serveur fournissant le service préalablement à la réception de la requête relative au service.

La fourniture au serveur fournissant le service, d'une liste de serveurs mandataires en charge du contrôle des requêtes pour ce service, préalablement à la réception de la requête, permet au fournisseur de services de disposer d'une liste à jour de des serveurs mandataires. Elle permet en outre lorsque cette liste est par exemple définie au sein d'un paramétrage du fournisseur de services d'offrir une étanchéité plus importante vis-à-vis du réseau et donc une meilleure protection contre des attaques visant le fournisseur de services.

Selon une caractéristique particulière le procédé de contrôle comprend en outre, les étapes suivantes mises en œuvre par un serveur mandataire en charge du contrôle des requêtes pour le service à réception de la requête transmise :
- détermination que la requête a transité par un serveur mandataire non chargé du contrôle des requêtes pour le service ;
- application d'une action corrective relative à la requête.

Le procédé permet à un serveur mandataire de déterminer si une requête a été reçue directement d'un navigateur ou d'une autre application permettant un accès à l'Internet selon un mode normal de fonctionnement, ou encore de déterminer si cette dernière a transité par un serveur mandataire non contrôlé par un tiers de confiance avant d'être reçue. Dans ce dernier cas, le procédé permet d'exécuter une action corrective appliquée à la requête afin par exemple de délivrer le service requis, ou encore d'exécuter une action préventive afin par exemple de prévenir un utilisateur d'une faille potentielle de sécurité relative à son navigateur ou à l'application qu'il a utilisé pour émettre la requête.

Selon une caractéristique particulière l'action corrective appartient à un groupe comprenant l'envoi d'une notification à destination d'un équipement émetteur de la requête, l'envoi d'une notification à destination du serveur mandataire non chargé du contrôle des requêtes pour le service par lequel a transité la requête, un traitement de la requête afin de rendre le service requis, un enregistrement de la requête, une limitation des ressources du réseau attribuées pour le traitement de la requête.

L'envoi d'une notification à destination de l'équipement émetteur de la requête présente l'avantage déjà mentionné précédemment d'informer un utilisateur d'une faille potentielle de sécurité relative par exemple à son navigateur. L'envoi d'une notification à destination du serveur mandataire par lequel a transité la requête permet d'émettre un avertissement à son égard lorsque ce dernier n'a pas respecté le routage recommandé pour le service requis. L'enregistrement de la requête permet de produire des statistiques relatives à un routage non conforme des requêtes reçues par le serveur mandataire en charge du contrôle des requêtes pour le service. Ces statistiques fournissent par ailleurs une information sur la fréquence d'occurrence d'un routage non conforme pour une application donnée, permettant de déterminer si l'erreur de routage présente un caractère anecdotique ou non. Une limitation des ressources du réseau attribuées pour le traitement de la requête est également permise par le procédé.

Selon une caractéristique particulière l'étape de transmission du procédé consiste à rediriger la requête vers au moins un serveur mandataire par l'intermédiaire de l'équipement émetteur de la requête.

La redirection de la requête par l'intermédiaire de l'équipement émetteur de la requête permet au serveur de réutiliser un mécanisme existant, et facilite donc la mise en œuvre du procédé dans des équipements d'infrastructures existantes. En outre la requête transitant de nouveau lors d'une redirection par le serveur mandataire non chargé du contrôle des requêtes pour le service, un routage incorrect de la requête peut aisément être détecté par le serveur mandataire vers lequel elle est redirigée.

Selon un deuxième aspect, l'invention a pour objet un serveur agencé pour contrôler un routage d'une requête relative à un service, comprenant :
- un module de réception agencé pour recevoir la requête ;
- un module d'envoi agencé pour transmettre la requête vers au moins un serveur mandataire en charge du contrôle des requêtes pour le service ;
- un module de contrôle agencé pour vérifier que la requête a été reçue d'un serveur mandataire en charge du contrôle des requêtes pour le service ;
- un module de commande agencé pour, lorsque la requête n'a pas été reçue d'un serveur mandataire en charge du contrôle des requêtes pour le service, commander une transmission de la requête relative à un service vers au moins un serveur mandataire en charge du contrôle des requêtes pour le service.

Les avantages énoncés pour l'une quelconque des caractéristiques du procédé de contrôle mises en œuvre par le serveur fournissant le service selon le premier aspect sont directement transposables au serveur selon le deuxième aspect.

Selon une caractéristique particulière le serveur comprend un module d'interrogation agencé pour interroger un serveur de résolution pour l'obtention d'une liste d'au moins un serveur mandataire en charge du contrôle des requêtes pour le service.

Selon un troisième aspect l'invention concerne un serveur mandataire agencé pour détecter lors de la réception d'une requête relative à un service, un routage de la requête vers un serveur mandataire non chargé du contrôle des requêtes, comprenant :
- un module de réception agencé pour recevoir la requête ;
- un module de contrôle agencé pour déterminer que la requête a transité par un serveur mandataire non chargé du contrôle des requêtes ;
- un module de commande agencé pour commander l'application d'une action corrective relative à la requête ;
- un module d'envoi agencé pour envoyer une requête suite à une commande d'une application d'une action corrective relative à la requête.

Les avantages énoncés pour l'une quelconque des caractéristiques du procédé de contrôle mises en œuvre par le serveur mandataire selon le premier aspect sont directement transposables au serveur mandataire selon le troisième aspect.

Selon un quatrième aspect l'invention a pour objet un système de contrôle, agencé pour contrôler le routage d'une requête relative à un service, comprenant :
- un serveur selon le deuxième aspect ;
- un serveur mandataire selon le troisième aspect.

Les avantages énoncés pour l'une quelconque des caractéristiques du procédé de contrôle selon le premier aspect sont directement transposables au système selon le quatrième aspect.

Selon un cinquième aspect, l'invention concerne également un programme pour un serveur agencé pour contrôler le routage d'une requête relative à un service et pour un serveur mandataire, comprenant des instructions de code de programme destinées à commander l'exécution des étapes du procédé précédemment décrit, lorsque ledit programme est exécuté par lesdits serveurs et un support d'enregistrement lisible par un serveur sur lequel est enregistré un programme pour un serveur.

L'invention sera mieux comprise à l'aide de la description suivante de modes de réalisation particuliers, en référence aux dessins annexés sur lesquels :
- la figure 1 représente un système de contrôle du routage d'une requête relative à un service selon un mode particulier de réalisation ;
- la figure 2a représente un schéma synoptique des étapes du procédé de contrôle du routage d'une requête relative à un service et des échanges entre équipements mettant en œuvre le procédé selon un premier mode particulier de réalisation ;
- la figure 2b représente un schéma synoptique des étapes du procédé de contrôle du routage d'une requête relative à un service et des échanges entre équipements mettant en œuvre le procédé selon un deuxième mode particulier de réalisation ;
- la figure 3 représente un serveur mandataire selon un mode particulier de réalisation ;
- la figure 4 représente un serveur agencé pour contrôler un routage dans un réseau de communication d'une requête relative à un service émise par un terminal utilisateur selon un mode particulier de réalisation.

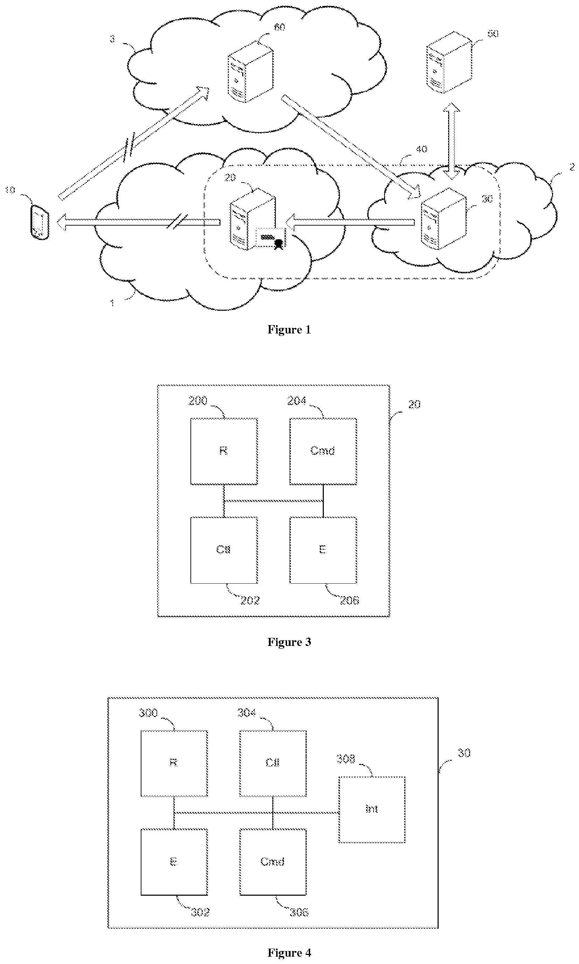

La **figure 1** représente un système 40 de contrôle du routage d'une requête relative à un service selon un mode particulier de réalisation. Le système 40 comprend un serveur mandataire 20 et un serveur 30 agencé pour fournir un service requis et contrôler le routage d'une requête relative à ce service. La requête est émise par un terminal utilisateur 10 (e.g. ordinateur, téléphone portable, tablette). Le serveur mandataire 20 est par exemple un équipement physique dédié localisé dans un réseau 1 d'un opérateur de réseau. Dans un autre mode de réalisation, le serveur mandataire est un module intégré à un équipement du réseau 1 (e.g. routeur, passerelle d'accès). Le serveur mandataire 20 est en particulier contrôlé par l'opérateur du réseau 1. Le serveur 30 est localisé dans un réseau 2 et communique avec un serveur 50 de résolution, par exemple un serveur de résolution de nom de domaine. Un serveur mandataire 60 non contrôlé par l'opérateur du réseau 1 est également représenté. Ce dernier serveur mandataire 60, à titre d'exemple illustratif appartient à un réseau tiers 3.

Dans ce mode de réalisation, une requête relative à un service fourni par le serveur 30 est émise depuis un navigateur installé sur le terminal utilisateur 10. Cette requête est par exemple une requête conforme au protocole HTTP 2.0 et relative à une ressource audio fournie par le serveur 30. La requête est émise à destination du serveur 30 et nécessite par ailleurs un enrichissement par le serveur mandataire 20 contrôlé par l'opérateur du réseau 1 afin de délivrer le service demandé par le terminal utilisateur 10. La requête est d'abord routée par le navigateur vers le serveur mandataire 60, avant d'être envoyée au serveur 30. Le serveur 30 vérifie qu'il a reçu la requête d'un serveur mandataire contrôlé par l'opérateur du réseau 1. Il interroge le serveur 50 de résolution de nom de domaine afin d'obtenir une liste de serveurs mandataires contrôlés par l'opérateur du réseau 1 associée à son nom de domaine. Le serveur mandataire 60 ne faisant pas partie de cette liste, le serveur 30 redirige la requête de service vers un serveur mandataire 20 appartenant à cette liste et contrôlé par l'opérateur du réseau 1. Le serveur mandataire 20 contrôlé par l'opérateur de réseau reçoit la requête redirigée et détecte qu'elle n'a pas été correctement routée. Il en informe ensuite le terminal utilisateur à l'origine de la requête.

Trois réseaux sont représentés sur la figure 1, il n'existe cependant pas de limitation quant à la localisation des serveurs mandataires 20 et 60, et du serveur 30 fournissant le service. En particulier les serveurs 20, 30 et 60 peuvent être localisés dans un même réseau. C'est généralement le cas pour les serveurs 20 et 30 lorsque l'opérateur du réseau est également le fournisseur du service requis.

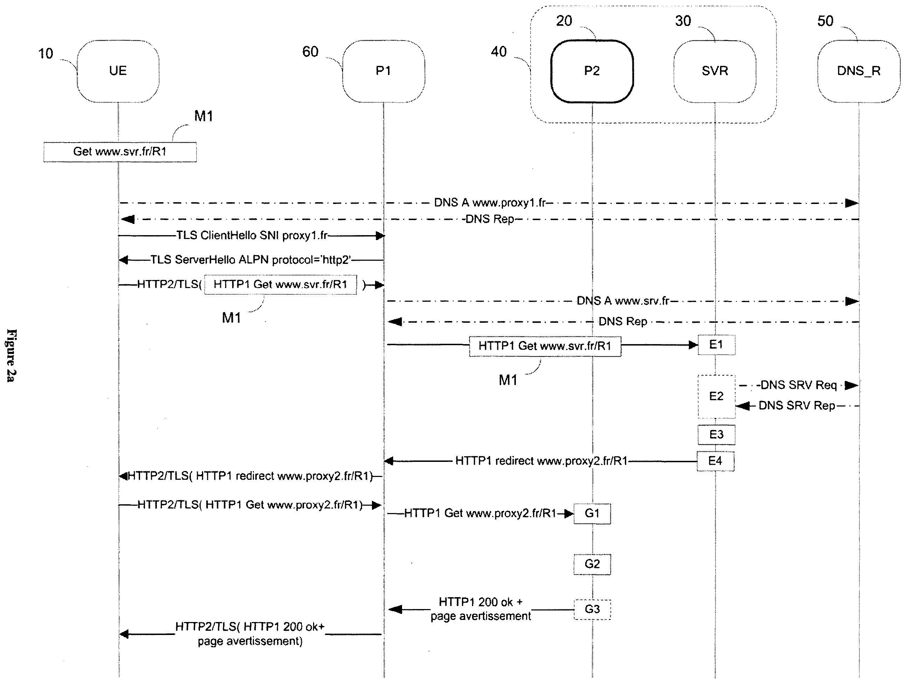

La **figure 2a** représente un schéma synoptique des étapes du procédé de contrôle du routage d'une requête relative à un service et des échanges entre les équipements mettant en œuvre le procédé selon un premier mode particulier de réalisation.

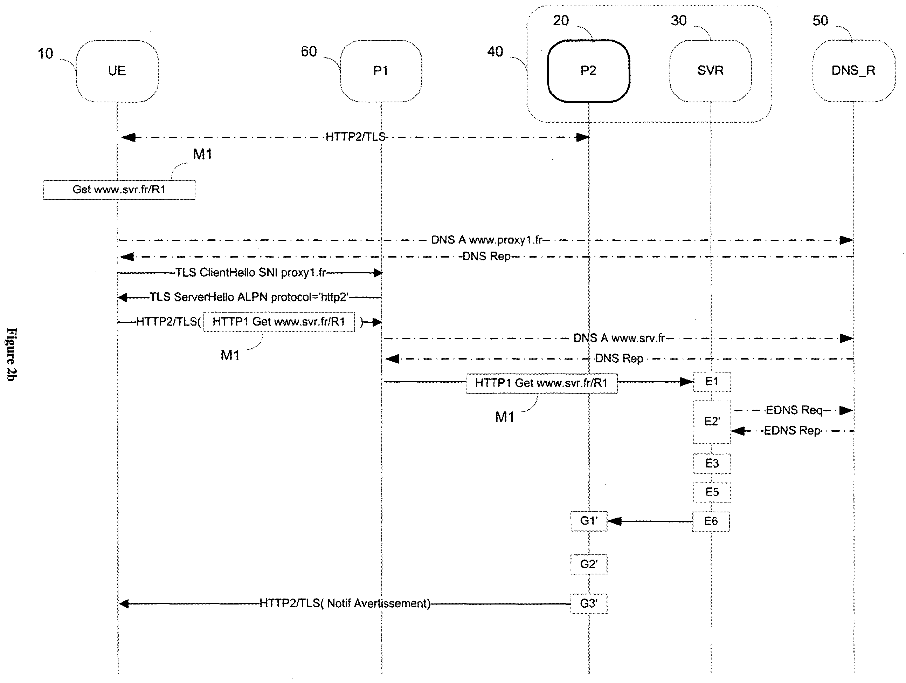

Dans le mode de réalisation décrit en relation avec la figure 2, un abonné d'un opérateur de réseau requiert un service à un serveur 30 via son terminal utilisateur UE 10. Le serveur 30 appartient par exemple à un fournisseur de services ayant délégué à l'opérateur de réseau une identification d'un type d'abonnement afin de pouvoir délivrer un service personnalisé à l'abonné. L'identification du type d'abonnement est réalisée par un serveur mandataire P2 20 contrôlé par l'opérateur de réseau et associé à un nom de domaine du serveur SVR 30. Cette association est en particulier rendue publique par la valorisation du champ « name » d'un enregistrement DNS (pour « Demain Name System ») de service ou « enregistrement SRV », associé au nom de domaine du fournisseur de services, avec le nom de domaine du serveur mandataire P2 20. L'enregistrement de service est plus particulièrement défini dans un document de l'IETF, RFC 2782. Dans le mode de réalisation décrit le serveur mandataire P2 20 a également pour fonction la traduction de requêtes émises conformément au protocole HTTP version 1.x en requêtes HTTP 2.0 et vice versa. L'expression HTTP version 1.x désigne indifféremment les protocoles HTTP dans leur version 1.0 ou 1.1. Par la suite l'expression « HTTP1 » fait référence à ces différentes versions du protocole HTTP.

Le terminal utilisateur UE 10 émet une requête M1 relative au service fourni par le serveur SVR 30 ayant par exemple pour nom de domaine « svr.fr ». Il n'existe pas de limitation quant au service proposé par le serveur SVR 30. Ce service consiste par exemple en la fourniture d'une page HTML (pour « Hypertext Markup Language ») à afficher sur l'écran du terminal utilisateur UE 10, en la fourniture d'un flux audio ou vidéo, ou de tout autre service pouvant être délivré par l'intermédiaire d'un protocole de communication client-serveur tel que le protocole HTTP. A titre d'exemple illustratif, la requête M1 émise est une requête HTTP1 « Get www.svr.fr/R1 ». Cette requête M1 est émise depuis une application (e.g. un navigateur) installée sur le terminal utilisateur UE 10, et indique plus particulièrement que l'application demande une ressource R1 hébergée par le serveur SVR 30 de nom de domaine « svr.fr ».

L'application installée sur le terminal utilisateur UE 10 ne tient pas compte du serveur mandataire P2 20 associé au nom de domaine du fournisseur de services proposant le service requis et interroge alors un serveur de résolution de nom de domaine DNS_R 50 afin d'obtenir une adresse IP (pour « Internet Protocol ») d'un serveur mandataire P1 60 non contrôlé par l'opérateur de réseau. Cette interrogation est par exemple une requête « DNS A www.proxy1.fr » permettant d'obtenir un enregistrement DNS de type A tel que défini dans un document de l'IETF RFC 1035, contenant une adresse IPv4 (pour « Internet Protocol version 4 ») associée au serveur mandataire P1 60 de nom de domaine « proxy1.fr ».

Après avoir reçu l'adresse IP du serveur mandataire P1 60, l'application installée sur le terminal utilisateur UE 10 initie une session d'échanges sécurisés TLS avec le serveur mandataire P1 60. Pour cela sont notamment échangés deux messages « TLS ClientHello SNI proxy1.fr » et « TLS ServerHello ALPN protocol='http2' ». Le protocole choisi pour la suite des échanges entre le terminal utilisateur 10 et le serveur mandataire P1 60 est déterminé lors de cette négociation TLS. Il s'agit dans le mode de réalisation décrit du protocole HTTP 2.0.

Une fois la session TLS négociée, les requêtes émises par l'application sont chiffrées et envoyées à l'aide du protocole HTTP 2.0. La requête M1 émise est ainsi routée vers le serveur mandataire P1 60, non contrôlé par l'opérateur de réseau.

Le serveur mandataire P1 60 interroge le serveur de résolution de nom de domaine DNS_R_50 afin d'obtenir une adresse IP correspondant au nom de domaine « svr.fr » du serveur SVR 30 fournissant le service demandé par la requête M1. Le serveur de résolution de nom de domaine DNS_R 50 retourne alors au serveur mandataire P1 60 une adresse IP permettant de transmettre la requête au serveur SVR 30.

Le procédé de contrôle du routage de la requête M1 mis en œuvre par le système de contrôle 40 débute à réception de la requête M1 par le serveur SVR 30, lors d'une étape E1.

Dans une étape E2, le serveur SVR 30 interroge un serveur de résolution de nom de domaine DNS_R 50 afin d'obtenir une liste de serveurs mandataires contrôlés par l'opérateur de réseau, associée à son nom de domaine. Plus précisément, une requête DNS SRV est envoyée par le serveur SVR 30 à destination d'un serveur de nom de domaine pour obtenir une liste L d'enregistrements SRV associée au nom de domaine « svr.fr ». La liste L obtenue par le serveur SVR 30 comprend en particulier un enregistrement SRV avec un champ « name » valorisé avec le nom de domaine « proxy2.fr » du serveur mandataire P2 20.

Dans une étape E3, le serveur SVR 30 vérifie qu'il a reçu la requête M1 d'un serveur mandataire contrôlé par l'opérateur de réseau. Le serveur SVR 30 détermine le nom de domaine de l'émetteur de la requête M1 qu'il a reçu à l'étape E1. Ce nom de domaine est par exemple obtenu par résolution inverse DNS à partir de l'adresse source IP extraite de l'entête d'un paquet IP dans lequel est encapsulée la requête M1. Le nom de domaine de l'émetteur de la requête M1 ainsi extrait, « proxy1.fr », est comparé aux noms de domaines des serveurs mandataires renseignés dans la liste L d'enregistrements SRV obtenue précédemment. Aucun nom dans la liste L d'enregistrements SRV ne correspondant au nom de domaine « proxy1.fr » du serveur mandataire P1 60 duquel le serveur SVR 30 a reçu la requête M1, un routage incorrect de la requête M1 est identifié par ce dernier.

La requête M1 n'ayant alors pas été reçue d'un serveur mandataire contrôlé par l'opérateur de réseau, le serveur SVR 30, dans une étape E4, la redirige vers un serveur mandataire contrôlé par l'opérateur de réseau appartenant à la liste L obtenue à l'étape E2. Ce serveur est dans le mode de réalisation décrit le serveur P2 20 associé au nom de domaine « proxy2.fr ». La requête M1 est classiquement une requête HTTP1, envoyé dans un format HTTP2/TLS par le serveur mandataire P2 20.

Lors d'une étape G1, le serveur mandataire P2 20 reçoit la requête redirigée par le serveur SVR 30. Cette requête est plus précisément reçue sur le port 80 du serveur mandataire P2 20.

Le serveur mandataire P2 20 ne recevant dans un comportement normal que des réponses HTTP1 sur son port 80, il détermine lors d'une étape G2 que la requête a transité par un serveur mandataire non contrôlé par l'opérateur de réseau.

Puis lors d'une étape G3, le serveur mandataire P2 20 exécute une action ou une série d'actions visant à prévenir ou réduire les effets d'un routage incorrect de la requête reçue et/ou d'une prochaine requête, ce qui met fin au procédé de contrôle du routage de la requête M1. A titre d'exemple illustratif, le serveur mandataire P2 20 envoie un message vers le terminal utilisateur 10 afin de l'alerter sur une faille potentielle de sécurité relative au routage de la requête M1. Outre cette notification destinée au terminal utilisateur 10, une action de routage de la requête M1 vers le port réservé au protocole HTTP 2.0 du serveur mandataire P2 20 permet par exemple à ce dernier d'effectuer sur la requête M1 l'opération qui lui a été déléguée par le fournisseur de services. Dans un autre mode de réalisation, la requête est redirigée vers le serveur mandataire P1 60 non contrôlé par l'opérateur de réseau, afin notamment de le prévenir qu'un navigateur n'a pas respecté les indications DNS relatives au serveur SVR 30 et au serveur mandataire contrôlé par l'opérateur de réseau. Dans un autre mode de réalisation, le serveur mandataire P2 20 émet une requête à destination d'un équipement réseau tel qu'un PCRF (pour « Policy and Charging Rules Function ») afin de réduire les ressources du réseau (e.g. bande passante) réservées pour le terminal utilisateur 10. Les différentes actions mentionnées, préventives, correctives, ou encore restrictives peuvent être combinées les unes avec les autres ou prises individuellement par le serveur mandataire P2 20.

Dans un autre mode de réalisation, aucune interrogation DNS n'est réalisée lors de l'étape E2 pour l'obtention de la liste de serveurs mandataires contrôlés par l'opérateur de réseau. Cette liste est obtenue par interrogation d'une base de données locale ou distante dans laquelle sont renseignés les serveurs mandataires contrôlé par l'opérateur de réseau. Il n'existe par ailleurs pas de limitation quant à l'administration de cette base de données qui peut être administrée par l'opérateur de réseau, par le fournisseur de services ou par un tiers.

Dans un autre mode de réalisation, la liste de serveurs mandataires contrôlés par l'opérateur de réseau est fournie par ce dernier au fournisseur de services. Il peut notamment s'agir d'une mise à disposition d'une liste de serveurs mandataires par l'opérateur de réseau afin que le fournisseur de services l'intègre dans un paramétrage du serveur SVR 30. Une étanchéité du système 40 vis-à-vis du réseau est ainsi rendue possible et permet de limiter les risques d'attaques à l'encontre du fournisseur de services.

Dans un autre mode de réalisation le serveur SVR 30 appartient au réseau de l'opérateur de réseau.

Dans un autre mode de réalisation l'étape G3 d'exécution d'une action ou d'une série d'actions en vue de prévenir ou corriger les effets d'un routage vers un serveur mandataire non contrôlé par l'opérateur est optionnelle.

Le procédé a été décrit avec une mise en œuvre pour le protocole HTTP, il peut cependant facilement être adapté à tout type de protocole d'échange client-serveur faisant intervenir un serveur mandataire pour la fourniture d'un service requis.

La **figure 2b** représente un schéma synoptique des étapes du procédé de contrôle du routage d'une requête relative à un service et des échanges entre les équipements mettant en œuvre le procédé selon un deuxième mode particulier de réalisation.

Dans ce deuxième mode de réalisation, de même que précédemment décrit en relation avec le premier mode de réalisation, le serveur SVR 30 reçoit la requête M1 relative à un service lors de l'étape E1 et vérifie à l'étape E2 que la requête M1 a été reçue d'un serveur mandataire en charge du contrôle des requêtes pour le service requis. Préalablement à une étape E4 qui sera décrite ultérieurement, une connexion HTTP2/TLS établie entre l'application ayant émis la requête depuis le terminal utilisateur UE 10 et le serveur mandataire P2 20, vient également s'ajouter aux échanges précédemment décrits en relation avec le premier mode de réalisation.

Dans une étape E2', le serveur SVR 30 interroge un serveur de résolution 50, par exemple un serveur de résolution de nom de domaine DNS afin d'obtenir une liste de serveurs mandataires contrôlés par l'opérateur de réseau, associée à son nom de domaine et ayant une session HTTP2/TLS établie avec le terminal utilisateur UE 10. Pour cela l'adresse IP et le port applicatif (port UDP, TCP, ...) utilisés par le terminal UE 10 sont obtenus par le serveur SVR 30, à partir par exemple d'un champ « X-Forwarded-For » extrait de l'entête de la requête M1. Cette adresse IP du terminal UE 10, le port applicatif, le nom de domaine de la requête et le nom de domaine du serveur SVR 30 sont ensuite envoyés au serveur de résolution de nom de domaine DNS_R 50 pour l'interroger. L'interrogation est par exemple une interrogation selon une extension EDNS pour « Extension mechanism for DNS » du protocole DNS définie dans un document de l'IETF RFC 2671. L'interrogation EDNS permet notamment de requérir en plus d'enregistrements SRV associés au nom de domaine du serveur SVR 30, une information de connexion pour une adresse IP du terminal utilisateur UE 10 et un serveur mandataire associé au nom de domaine du serveur SVR 30. Cette information de connexion indique par exemple si une session HTTP2/TLS est établie entre un serveur mandataire associé au nom de domaine du serveur SVR 30 et le terminal utilisateur UE 10. La liste de serveurs mandataires obtenue par cette interrogation EDNS comprend ainsi une information indiquant pour chacun de ses serveurs mandataires s'il existe une session HTTP2/TLS établie avec le terminal utilisateur UE 10 ayant émis la requête.

Le serveur de résolution 50 peut alternativement être un serveur d'optimisation du trafic applicatif tel que décrit dans un document de l'IETF intitulé « draf-ietf-alto-protocol-24 », un serveur d'établissement de communications conversationnelles tel que décrit dans un document de l'IETF intitulé « draft-ietf-rcweb-overview-08 », ou encore un contrôleur de réseau de distribution de contenu tel que décrit dans un document de l'IETF intitulé « draft-ietf-cdni-framework-07 ».

Le serveur SVR 30 met ensuite en œuvre l'étape E3 de même que précédemment décrite en relation avec le premier mode de réalisation. Un routage incorrect de la requête M1 est en particulier identifié par ce dernier.

Lors d'une étape E5, le serveur SVR 30 recherche dans la liste obtenue à l'étape E2' un serveur mandataire pour lequel une session HTTP2/TLS est établie avec le terminal utilisateur UE 10. Cette recherche est par exemple réalisée en parcourant la liste jusqu'à identification d'un serveur mandataire pour lequel une telle connexion est ouverte. A titre d'exemple, le serveur mandataire P2 20 est identifié comme disposant d'une telle connexion.

Lors d'une étape E6, le serveur SVR 30 envoie au serveur mandataire P2 20 une information relative au contrôle du routage de la requête M1. Cette information comprend notamment une adresse IP du serveur mandataire P1 60 par lequel le serveur SVR 30 a initialement reçu la requête M1, ainsi que cette dernière requête.

Dans une étape G1', le serveur mandataire P2 20 reçoit l'information relative au contrôle du routage de la requête M1 transmise par le serveur SVR 30. Cette information comprend en particulier la requête M1, et permet au serveur mandataire P2 20 à partir par exemple des informations relatives au serveur mandataire P1 60 contenues dans la requête M1, de déterminer lors d'une étape G2' que la requête a transité par ce serveur mandataire P1 60 non chargé du contrôle des requêtes pour le service.

Le procédé met ensuite en œuvre une étape G3', dans laquelle la session HTTP2/TLS établie entre le terminal utilisateur UE 10 et le serveur mandataire P2 20 peut être exploitée pour exécuter une action ou une série d'actions visant à prévenir ou réduire les effets d'un routage incorrect de la requête reçue et/ou d'une prochaine requête, ce qui met fin au procédé de contrôle du routage de la requête M1. A titre d'exemple illustratif, le serveur mandataire P2 20 envoie au terminal utilisateur UE 10 une notification par l'intermédiaire de la session HTTP2/TLS établie entre ce dernier et le serveur mandataire P2 20, afin d'alerter le terminal utilisateur UE 10 d'une faille potentielle de sécurité relative au routage de la requête M1. Dans un autre mode de réalisation le serveur peut effectuer une action ou une série d'actions afin de rendre le service requis par le terminal utilisateur UE 10. De même que décrit en relation avec le premier mode de réalisation, la requête peut également être redirigée vers le serveur mandataire P1 60 afin par exemple de le prévenir qu'une application n'a pas respecté les indications DNS relatives au serveur SVR 30 et au serveur mandataire chargé du contrôle des requêtes pour le service. L'envoi d'un message par le serveur mandataire P2 20 à destination d'un équipement réseau tel qu'un PCRF (pour « Policy and Charging Rules Function ») afin de réduire les ressources du réseau (e.g. bande passante) réservées pour le terminal utilisateur 10 est également possible. Les différentes actions mentionnées, préventives, correctives, ou encore restrictives peuvent être combinées les unes avec les autres ou prises individuellement par le serveur mandataire P2 20.

Dans un autre mode de réalisation, lorsqu'aucun serveur n'a été identifié disposer d'une connexion HTTP2/TLS établie lors de l'étape E5, le serveur SVR 30 ne met pas en œuvre les étapes G1' à G3', et envoie une requête de redirection à destination d'un serveur mandataire de la liste obtenue à l'étape E2'. Ce serveur est par exemple le serveur mandataire P2 20. Les étapes G1 à G3 sont alors mises en œuvre telles que décrites en relation avec le premier mode de réalisation.

Il est par ailleurs souligné que pour les deux modes de réalisation décrits en relation avec les figures 2a et 2b, seul un serveur de résolution de nom de domaine DNS_R 50 est représenté. Il est bien entendu que plusieurs serveurs de résolution de nom de domaine peuvent être interrogés par le terminal utilisateur UE 10, le serveur mandataire P1 60, ou l'un quelconque des équipements mis en œuvre par le procédé de contrôle, sans que ces serveurs interrogés soient identiques à ceux interrogés par un autre de ces équipements.

Un serveur mandataire va maintenant être décrit en relation avec la **figure 3****.** Un tel serveur mandataire 20 est notamment agencé pour détecter lors de la réception d'une requête relative à un service, un routage de la requête vers un serveur mandataire en charge du contrôle des requêtes pour ledit service. Le serveur mandataire 20 comprend notamment :
- un module de réception 200 agencé pour recevoir la requête ;
- un module de contrôle 202 agencé pour déterminer que la requête a transité par un serveur mandataire non chargé du contrôle des requêtes ;
- un module de commande 204 agencé pour commander l'application d'une action corrective relative à la requête ;
- un module d'envoi 206 agencé pour envoyer une requête suite à une commande d'une application d'une action corrective relative à la requête.

La **figure 4** représente un serveur 30 agencé pour contrôler un routage d'une requête relative à un service selon un mode particulier de réalisation. Il comprend notamment :
- un module de réception 300 agencé pour recevoir la requête ;
- un module d'envoi 302 agencé pour transmettre la requête vers un serveur mandataire en charge du contrôle des requêtes pour le service ;
- un module de contrôle 304 agencé pour vérifier que la requête a été reçue d'un serveur mandataire en charge du contrôle des requêtes pour le service ;
- un module de commande 306 agencé pour, lorsque la requête n'a pas été reçue d'un serveur mandataire en charge du contrôle des requêtes pour le service, commander une transmission de la requête relative à un service vers un serveur mandataire en charge du contrôle des requêtes pour le service.
- un module d'interrogation 308 agencé pour interroger un serveur de nom de domaine pour l'obtention d'une liste d'au moins un serveur mandataire en charge du contrôle des requêtes pour le service.

Dans un mode de réalisation particulier, le module d'interrogation 308 n'est pas implémenté. C'est notamment le cas lorsque la liste de serveurs mandataires en charge du contrôle des requêtes pour le service n'est pas obtenue par interrogation d'un serveur de nom de domaine tel que décrit précédemment en relation avec la figure 2.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 200, 202, 204, 206, 300, 302, 304, 306, et 308 sont agencés pour mettre en œuvre le procédé de contrôle précédemment décrit. Il s'agit de préférence de modules logiciels comprenant des instructions logicielles pour faire exécuter celles des étapes du procédé de contrôle précédemment décrit, mises en œuvre par un serveur agencé pour contrôler le routage d'une requête relative à un service et par un serveur mandataire. L'invention concerne donc aussi :
- un programme pour un serveur agencé pour contrôler le routage d'une requête relative à un service, comprenant des instructions de code de programme destinées à commander l'exécution des étapes du procédé de contrôle précédemment décrit, lorsque ledit programme est exécuté par ledit serveur ;
- un programme pour un serveur mandataire, comprenant des instructions de code de programme destinées à commander l'exécution des étapes du procédé de contrôle précédemment décrit, lorsque ledit programme est exécuté par ledit serveur ;
- un support d'enregistrement lisible par un serveur agencé pour contrôler le routage d'une requête relative à un service sur lequel est enregistré le programme pour un tel serveur.
- un support d'enregistrement lisible par un serveur mandataire sur lequel est enregistré le programme pour un tel serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de contrôle du routage d'une requête (M1) relative à un service, ledit procédé comprenant les étapes suivantes mises en œuvre par un serveur (30) hébergeant ledit service :
- réception (E1) de la requête relative audit service ;
- vérification (E3) que la requête a été reçue d'un serveur mandataire (20) en charge du contrôle des requêtes pour ledit service ;
et lorsque ladite requête n'a pas été reçue d'un serveur mandataire en charge du contrôle des requêtes pour ledit service:
- transmission (E4, E6) de ladite requête relative audit service vers au moins un serveur mandataire en charge du contrôle des requêtes pour ledit service.

2. Procédé de contrôle selon la revendication 1, dans lequel la requête est reçue en provenance d'un serveur mandataire (60), la vérification comprenant la recherche de l'appartenance dudit serveur mandataire à une liste d'au moins un serveur mandataire en charge du contrôle des requêtes pour ledit service.

3. Procédé de contrôle selon la revendication 2, dans lequel le procédé comprend l'obtention (E2, E2') de ladite liste auprès d'un serveur de résolution (50), en particulier un serveur de résolution de nom de domaine, un serveur d'optimisation de trafic applicatif ou un serveur d'établissement de communications conversationnelles.

4. Procédé de contrôle selon l'une des revendications 2 ou 3, comprenant en outre la recherche (E5), dans ladite liste, d'une information identifiant un serveur mandataire en connexion avec l'équipement ayant émis la requête, l'étape de transmission consistant à envoyer la requête vers le serveur mandataire identifié.

5. Procédé de contrôle selon la revendication 2, dans lequel ladite liste est fournie au serveur hébergeant le service préalablement à la réception de ladite requête.

6. Procédé de contrôle selon l'une des revendications 1 à 5, comprenant en outre, les étapes suivantes mises en œuvre par un serveur mandataire (20) en charge du contrôle des requêtes pour ledit service à réception (G1, G1') de la requête transmise :
- détermination (G2) que la requête a transité par un serveur mandataire (60) non chargé du contrôle des requêtes pour ledit service ;
- application (G3) d'une action corrective relative à la requête.

7. Procédé de contrôle selon la revendication 6, dans lequel l'action corrective appartient à un groupe comprenant l'envoi d'une notification à destination d'un équipement émetteur de la requête, l'envoi d'une notification à destination du serveur mandataire non chargé du contrôle des requêtes pour ledit service par lequel a transité la requête, un traitement de la requête afin de rendre le service requis, un enregistrement de la requête, une limitation des ressources du réseau attribuées pour le traitement de la requête.

8. Procédé de contrôle selon l'une des revendications 1 à 3, dans lequel l'étape de transmission consiste à rediriger ladite requête vers ledit au moins un serveur mandataire par l'intermédiaire de l'équipement émetteur de ladite requête.

9. Serveur (30) agencé pour contrôler un routage d'une requête relative à un service, comprenant :
- un module de réception (300) agencé pour recevoir ladite requête ;
- un module d'envoi (302) agencé pour transmettre ladite requête vers au moins un serveur mandataire en charge du contrôle des requêtes pour ledit service ;
- un module de contrôle (304) agencé pour vérifier que ladite requête a été reçue d'un serveur mandataire en charge du contrôle des requêtes pour ledit service ;
- un module de commande (306) agencé pour, lorsque ladite requête n'a pas été reçue d'un serveur mandataire en charge du contrôle des requêtes pour ledit service, commander une transmission de ladite requête relative audit service vers au moins un serveur mandataire en charge du contrôle des requêtes pour ledit service.

10. Serveur selon la revendication 9, comprenant en outre un module d'interrogation (308) agencé pour interroger un serveur de résolution pour l'obtention d'une liste d'au moins un serveur mandataire en charge du contrôle des requêtes pour ledit service.

11. Serveur mandataire (20) agencé pour détecter lors de la réception d'une requête émise par un terminal utilisateur et relative à un service, un routage de ladite requête vers un serveur mandataire non chargé du contrôle des requêtes, comprenant :
- un module de réception (200) agencé pour recevoir ladite requête ;
- un module de contrôle (202) agencé pour déterminer que la requête a transité par un serveur mandataire non chargé du contrôle des requêtes ;
- un module de commande (204) agencé pour commander l'application d'une action corrective relative à la requête ;
- un module d'envoi (206) agencé pour envoyer un message d'alerte au terminal utilisateur ou à un équipement de type « Policy and Charging Rules Function » suite à une commande d'une application d'une action corrective relative à la requête.

12. Système de contrôle (40), agencé pour contrôler le routage d'une requête relative à un service, comprenant :
- un serveur (30) selon l'une des revendications 9 à 10 ;
- un serveur mandataire (20) selon la revendication 11.

13. Programme pour un serveur, comprenant des instructions de code de programme destinées à commander l'exécution des étapes du procédé selon l'une des revendications 1 à 8, lorsque ledit programme est exécuté par ledit serveur.

14. Support d'enregistrement lisible par un serveur sur lequel est enregistré le programme selon la revendication 13.

## Patentansprüche

1. Verfahren zur Steuerung des Routings einer auf einen Dienst bezogenen Anforderung (M1), wobei das Verfahren die folgenden Schritte umfasst, die von einem Server (30) durchgeführt werden, der den Dienst hostet:
- Empfang (E1) der auf den Dienst bezogenen Anforderung;
- Überprüfung (E3), ob die Anforderung von einem Proxy-Server (20) empfangen worden ist, der die Steuerung der Anforderungen für den Dienst unterstützt;
und wenn die Anforderung nicht von einem Proxy-Server empfangen worden ist, der die Steuerung der Anforderungen für den Dienst unterstützt:
- Übertragung (E4, E6) der auf den Dienst bezogenen Anforderung an wenigstens einen Proxy-Server, der die Steuerung der Anforderungen für den Dienst unterstützt.

2. Verfahren zur Steuerung nach Anspruch 1, wobei die Anforderung von einem Proxy-Server (60) empfangen wird, wobei die Überprüfung die Untersuchung der Zugehörigkeit des Proxy-Servers zu einer Liste von mindestens einem Proxy-Server, der die Steuerung der Anforderungen für den Dienst unterstützt, umfasst.

3. Verfahren zur Steuerung nach Anspruch 2, wobei das Verfahren den Bezug (E2, E2') der Liste von einem Auflösungsserver (50) umfasst, insbesondere von einem DNS-Resolver, einem Optimierungsserver für Anwendungsverkehr oder einem Server zur Einrichtung von Konversationsverbindungen.

4. Verfahren zur Steuerung nach einem der Ansprüche 2 oder 3, welches außerdem die Suche (E5), in der Liste, nach einer Information umfasst, die einen Proxy-Server identifiziert, der mit der Einrichtung in Verbindung steht, welche die Anforderung gesendet hat, wobei der Schritt der Übertragung darin besteht, die Anforderung an den identifizierten Proxy-Server zu senden.

5. Verfahren zur Steuerung nach Anspruch 2, wobei die Liste an den Server, der den Dienst hostet, vor dem Empfang der Anforderung geliefert wird.

6. Verfahren zur Steuerung nach einem der Ansprüche 1 bis 5, welches außerdem die folgenden Schritte umfasst, die von einem Proxy-Server (20), der die Steuerung der Anforderungen für den Dienst unterstützt, bei Empfang (G1, G1') der übertragenen Anforderung durchgeführt werden:
- Bestimmung (G2), ob die Anforderung einen Proxy-Server (60) durchlaufen hat, der die Steuerung der Anforderungen für den Dienst nicht unterstützt;
- Anwendung (G3) einer Korrekturaktion in Bezug auf die Anforderung.

7. Verfahren zur Steuerung nach Anspruch 6, wobei die Korrekturaktion einer Gruppe angehört, welche das Senden einer Benachrichtigung an eine Einrichtung, welche die Anforderung gesendet hat, das Senden einer Benachrichtigung an den Proxy-Server, der die Steuerung der Anforderungen für den Dienst nicht unterstützt und den die Anforderung durchlaufen hat, eine Verarbeitung der Anforderung, um den angeforderten Dienst zu erbringen, eine Registrierung der Anforderung, eine Begrenzung der für die Verarbeitung der Anforderung zugewiesenen Ressourcen des Netzes umfasst.

8. Verfahren zur Steuerung nach einem der Ansprüche 1 bis 3, wobei der Schritt der Übertragung darin besteht, die Anforderung über die Einrichtung, welche die Anforderung gesendet hat, an den wenigstens einen Proxy-Server umzuleiten.

9. Server (30), welcher dafür ausgelegt ist, ein Routing einer auf einen Dienst bezogenen Anforderung zu steuern, umfassend:
- ein Empfangsmodul (300), das dafür ausgelegt ist, die Anforderung zu empfangen;
- ein Sendemodul (302), das dafür ausgelegt ist, die Anforderung an wenigstens einen Proxy-Server zu übertragen, der die Steuerung der Anforderungen für den Dienst unterstützt;
- ein Kontrollmodul (304), das dafür ausgelegt ist zu überprüfen, ob die Anforderung von einem Proxy-Server empfangen worden ist, der die Steuerung der Anforderungen für den Dienst unterstützt;
- ein Steuerungsmodul (306), das dafür ausgelegt ist, wenn die Anforderung nicht von einem Proxy-Server empfangen worden ist, der die Steuerung der Anforderungen für den Dienst unterstützt, eine Übertragung der auf den Dienst bezogenen Anforderung an wenigstens einen Proxy-Server, der die Steuerung der Anforderungen für den Dienst unterstützt, zu steuern.

10. Server nach Anspruch 9, welcher außerdem ein Abfragemodul (308) umfasst, das dafür ausgelegt ist, einen Auflösungsserver abzufragen, um eine Liste von mindestens einem Proxy-Server zu beziehen, der die Steuerung der Anforderungen für den Dienst unterstützt.

11. Proxy-Server (20), welcher dafür ausgelegt ist, beim Empfang einer Anforderung, die von einem Benutzerendgerät gesendet wurde und auf einen Dienst bezogen ist, ein Routing der Anforderung zu einem Proxy-Server zu erkennen, der die Steuerung der Anforderungen nicht unterstützt, umfassend:
- ein Empfangsmodul (200), das dafür ausgelegt ist, die Anforderung zu empfangen;
- ein Kontrollmodul (202), das dafür ausgelegt ist zu bestimmen, ob die Anforderung einen Proxy-Server durchlaufen hat, der die Steuerung der Anforderungen nicht unterstützt;
- ein Steuerungsmodul (204), das dafür ausgelegt ist, die Anwendung einer Korrekturaktion in Bezug auf die Anforderung zu steuern;
- ein Sendemodul (206), das dafür ausgelegt ist, im Anschluss an eine Steuerung einer Anwendung einer Korrekturaktion in Bezug auf die Anforderung eine Warnnachricht an das Benutzerendgerät oder an eine Einrichtung vom Typ "Policy and Charging Rules Function" zu senden.

12. Steuerungssystem (40), welches dafür ausgelegt ist, das Routing einer auf einen Dienst bezogenen Anforderung zu steuern, umfassend:
- einen Server (30) nach einem der Ansprüche 9 bis 10;
- einen Proxy-Server (20) nach Anspruch 11.

13. Programm für einen Server, welches Programmcodeanweisungen umfasst, die dazu bestimmt sind, die Ausführung der Schritte des Verfahrens nach einem der Ansprüche 1 bis 8 zu steuern, wenn das Programm von dem Server ausgeführt wird.

14. Aufzeichnungsmedium, das von einem Server lesbar ist und auf dem das Programm nach Anspruch 13 aufgezeichnet ist.

## Claims

1. Method for monitoring the routing of a request (Ml) relating to a service, said method comprising the following steps implemented by a server (30) hosting said service:
- reception (E1) of the request relating to said service;
- checking (E3) that the request has been received from a proxy server (20) responsible for monitoring requests for said service;
and when said request has not been received from a proxy server responsible for monitoring requests for said service:
- transmission (E4, E6) of said request relating to said service to at least one proxy server responsible for monitoring requests for said service.

2. Monitoring method according to Claim 1, wherein the request is received from a proxy server (60), the check comprising the search for said proxy server in a list of at least one proxy server responsible for monitoring requests for said service.

3. Monitoring method according to Claim 2, wherein the method comprises the obtaining (E2, E2') of said list from a resolution server (50), in particular a domain name resolution server, an application traffic optimization server or a conversational call setup server.

4. Monitoring method according to either of Claims 2 and 3, further comprising the search (E5), in said list, for information identifying a proxy server connected with the equipment item having transmitted the request, the transmission step consisting in sending the request to the identified proxy server.

5. Monitoring method according to Claim 2, wherein said list is supplied to the server hosting the service prior to the reception of said request.

6. Monitoring method according to one of Claims 1 to 5, further comprising the following steps implemented by a proxy server (20) responsible for monitoring requests for said service on reception (G1, G1') of the transmitted request:
- determination (G2) that the request has passed through a proxy server (60) not responsible for monitoring requests for said service;
- application (G3) of a corrective action relating to the request.

7. Monitoring method according to Claim 6, wherein the corrective action belongs to a group comprising the sending of a notification to an equipment item transmitting the request, the sending of a notification to the proxy server not responsible for monitoring requests for said service through which the request has passed, a processing of the request in order to make the service requested, a recording of the request, a limitation of the resources of the network assigned for the processing of the request.

8. Monitoring method according to one of Claims 1 to 3, wherein the transmission step consists in redirecting said request to said at least one proxy server via the equipment item transmitting said request.

9. Server (30) arranged to monitor a routing of a request relating to a service, comprising:
- a reception module (300) arranged to receive said request;
- a sending module (302) arranged to transmit said request to at least one proxy server responsible for monitoring requests for said service;
- a monitoring module (304) arranged to check that said request has been received from a proxy server responsible for monitoring requests for said service;
- a control module (306) arranged to, when said request has not been received from a proxy server responsible for monitoring requests for said service, control a transmission of said request relating to said service to at least one proxy server responsible for monitoring requests for said service.

10. Server according to Claim 9, further comprising an interrogation module (308) arranged to interrogate a resolution server to obtain a list of at least one proxy server responsible for monitoring requests for said service.

11. Proxy server (20) arranged to detect, upon the reception of a request transmitted by a user terminal and relating to a service, a routing of said request to a proxy server not responsible for monitoring requests, comprising:
- a reception module (200) arranged to receive said request;
- a monitoring module (202) arranged to determine that the request has passed through a proxy server not responsible for monitoring requests;
- a control module (204) arranged to control the application of a corrective action relating to the request;
- a sending module (206) arranged to send an alert message to the user terminal or to an equipment item of "Policy and Charging Rules Function" type following a command for an application of a corrective action relating to the request.

12. Monitoring system (40), arranged to monitor the routing of a request relating to a service, comprising:
- a server (30) according to either of Claims 9 and 10;
- a proxy server (20) according to Claim 11.

13. Program for a server, comprising program code instructions intended to control the execution of the steps of the method according to one of Claims 1 to 8, when said program is run by said server.

14. Storage medium that can be read by a server on which the program according to Claim 13 is stored.
